(19) **Europäisches Patentamt**

**European Patent Office**

**Office européen des brevets**

(11) **EP 0 653 388 B2**

(12) **NEW EUROPEAN PATENT SPECIFICATION**

(45) Date of publication and mention
of the opposition decision:
**02.01.2004 Bulletin 2004/01**

(45) Mention of the grant of the patent:
**24.03.1999 Bulletin 1999/12**

(21) Application number: **94117722.2**

(22) Date of filing: **10.11.1994**

(51) Int Cl.[7]: **C03C 4/02**, C03C 3/087

(54) **Gray glass composition**

Graue Glaszusammensetzung

Composition de verre gris

(84) Designated Contracting States:
**AT BE CH DE DK ES FR GB IT LI LU SE**

(30) Priority: **16.11.1993 US 153733**

(43) Date of publication of application:
**17.05.1995 Bulletin 1995/20**

(73) Proprietor: **PPG Industries Ohio, Inc.**
**Cleveland, OH 44111 (US)**

(72) Inventors:
• **Krumwiede, John Franklin**
**Cheswick, Pa. 15024 (US)**
• **Longobardo, Anthony Vincent**
**Butler, Pa. 16001 (US)**
• **Shelestak, Larry John**
**Bairdford, Pa. 15006 (US)**

(74) Representative:
**Sternagel, Fleischer, Godemeyer & Partner**
**Patentanwälte**
**Braunsberger Feld 29**
**51429 Bergisch Gladbach (DE)**

(56) References cited:
**EP-A- 0 349 909** **EP-A- 0 452 207**
**EP-A- 0 482 535** **EP-A- 0 536 049**
**EP-A- 0 565 882** **WO-A-94/18135**
**GB-A- 2 071 082** **US-A- 4 104 076**
**US-A- 5 023 210**

• **Römpp Chemie Lexikon, 10th edition, 1997, page 786.**
• **The handbook of glass manufacture, 3rd edition, vol. II, 1984, pages 979,980.**
• **Ullmann's Encyclopedia of Industrial Chemistry, 5th edition, vol.A, 1986, pages 300-301.**

**Description**

BACKGROUND OF THE INVENTION

This invention involves a neutral gray colored glass that has a luminous transmittance that makes it highly desirable for use as privacy glazing in vehicle, e.g. in the rear portions of vans. In particular, the glass of the present invention has a luminous transmittance range of 20 to 50%. The desired color and performance is attained by using iron, cobalt, selenium and/or nickel as colorants. In addition, the glass of the present invention generally exhibits lower infrared and total solar energy transmittance than typical green glasses used in automotive applications to reduce heat gain in the interior of the enclosure. The glass is also compatible with flat glass manufacturing methods.

Various heat-absorbing glass substrates are known in the art. The primary colorant in typical green tinted automotive glasses is iron, which is usually present in both the $Fe_2O_3$ and FeO forms. As is conventional, the total amount of iron present in a glass is expressed herein as $Fe_2O_3$, regardless of the form actually present. Typical green tinted automotive glass has about 0.5 percent by weight total iron, with the ratio of FeO to total iron being about 0.25.

Some glasses, e.g. U.S. Reissue Patent No. 25,312 to Duncan et al., produce a gray color in the glass by including nickel oxide as a colorant. However, inclusion of nickel containing materials must be carefully controlled because the presence of nickel during the melting process sometimes leads to the formation of nickel sulfide stones in the glass. Additional potential problems faced when using nickel include haze formation on the glass surface due to reduction of the nickel in the tin bath and change in the glass color when it is heat treated.

To avoid this problem, nickel-free colored glasses containing iron oxide, cobalt oxide, and selenium were developed as disclosed in U.S. Patent No. 3,296,004 to Duncan et al., U.S. Patent No. 3,723,142 to Kato et al. and British Patent Specification 1,331,492 to Bamford. In U.S. Patent No. 4,104,076 to Pons, instead of nickel, $Cr_2O_3$ or $UO_2$ are used in combination with iron oxide, cobalt oxide, and selenium to produce gray glass. A more recent, nickel-free version of gray glass is disclosed in U.S. Patent No. 5,023,210 to Krumwiede et al. which uses iron oxide, cobalt oxide, selenium, and chromic oxide as colorants.

EP-A 536 049 discloses a colored soda-lime-silica glass composition having a luminous transmittance ranging from 20% to 60% and a total solar energy transmittance ranging from 10% to 48% at a thickness of 3.85mm. As colorants, the glass composition contains 0.45% to 2.5% $Fe_2O_3$ (total iron), 0.001% to 0.02% CoO, 0% to 0.0025% Se et 0% to 0.1% $Cr_2O_3$. Compositions showing on excitation purity below 3% have either a luminous transmittance of above 50% or a total iron content of above 1.2%.

EP-A 349 909 describes a neutral, dark gray, nickel-free, soda-lime-silica glass having luminous transmittance less than 20 percent produced with colorants consisting essentially of 0.55 to 1.0 percent by weight total iron (at least 15 percent in the ferrous state), 0.005 to 0.02 percent CoO, and 0.003 to 0.02 percent Se. The flat glass product having such a composition is particularly suitable for use in sun roofs.

From EP-A 482 535, a neutral, dark gray, soda-lime-silica glass having luminous transmittance less than 32 percent, infrared transmittance less than 15 percent, and total solar energy transmittance less than 20 percent (all at 3.9 millimeter thickness) is known having colorants consisting essentially of 1.0 to 1.7 percent by weight total iron, at least 0.27 percent FeO, 0.001 to 0.002 percent CoO, and 0.002 to 0.005 percent Se and with avoidance of constituents that may cause difficulty in manufacturing or in subsequent use of the glass such as nickel, chromium, manganese, and titanium. The flat glass product having such a composition is particularly suitable for use as privacy glazing of the type used for automotive glazing. The use of the glass as a substrate for a reflectively coated product is also disclosed.

Many of the commercially available gray glasses are too dark to be used in the forward vision area of a vehicle. In addition, the glasses may also be too dark to allow safety lighting mounted in the interior of the vehicle from being seen from the exterior of the vehicle. It would be desirable to have a neutral gray glass that provides a dark gray color for use , in privacy areas of a vehicle while allowing adequate safety lighting illumination and have a consistent color and further that is compatible with commercial flat glass manufacturing techniques.

SUMMARY OF THE INVENTION

The present invention provides a glass composition having a neutral gray color and a luminous (visible) transmittance within a range that allows the glass to be used as privacy glazing in a vehicle. The glass of the present invention has a standard soda-lime-silica flat glass base composition. It has been found that a neutral gray colored glass with a luminous transmittance (C.I.E. illuminant A) ranging from 20% to 50% at a thickness of 3.9 millimeters and an excitation purity of no higher than 3% may be attained by using as colorants: 0.15 to 1.2 wt. % of the total glass $Fe_2O_3$ (total iron), no greater than 0.30 wt. % FeO, 60-180 PPM CoO, 0-30 PPM Se, and 0-550 PPM NiO and $TiO_2$ as ultraviolet radiation absorbing material in an amount of from 0.1 to 1.0 weight percent of the glass composition. A preferred embodiment of such a glass composition includes 0.20 to 1.1 wt. % $Fe_2O_3$, 0.05 to 0.29 wt. % FeO, 62 to 170 PPM CoO, 0 to 24 PPM Se and 0 to 500 PPM NiO.

The dominant wavelength of the glasses in the present invention may vary somewhat in accordance with particular color preferences. In the present invention, it is preferred that the glass be a neutral gray color characterized by dominant wavelengths in the range of 480 to 580 nanometers, preferably 485 to 540 nanometers, with an excitation purity of no higher than 3%.

DETAILED DESCRIPTION

The base glass of the present invention, that is, the major constituents of the glass without colorants, is commercial soda-lime-silica glass characterized as follows:

|  | Weight % |
|---|---|
| $SiO_2$ | 66-75 |
| $Na_2O$ | 10-20 |
| CaO | 5-15 |
| MgO | 0-5 |
| $Al_2O_3$ | 0-5 |
| $K_2O$ | 0-5 |
| BaO | 0-1 |

To this base glass the present invention adds colorants in the form of iron, cobalt, selenium and/or nickel. In one particular embodiment of the invention, the glass is essentially nickel-free; that is, no deliberate addition of nickel or nickel compounds is made, although the possibility of traces of nickel due to contamination may not always be avoided. The glass in the present invention is essentially free of other colorants. It should be appreciated that the glass compositions disclosed herein may include small amounts of other materials, for example melting and refining aids, tramp materials or impurities. Such materials may include, but are not limited to chromium, manganese, cerium, molybdenum, chlorine, zinc, zirconium, sulfur, fluorine, lithium and strontium. It should be further appreciated that some of these materials as well as others may be added to the glass to improve the solar performance of the glass as will be discussed later in more detail.

The selenium colorant contributes a pink color to the glass as well as a brown color when complexed with iron to form iron selenide (FeSe). Cobalt produces a blue color. Iron contributes yellow and blue in varying proportions depending upon the oxidation state. Nickel, if used, contributes a green-brown to yellow-brown color.

The glass of the present invention may be melted and refined in a continuous, large-scale, commercial melting operation and formed into flat glass sheets of varying thicknesses by the float method in which the molten glass is supported on a pool of molten metal, usually tin, as it assumes a ribbon shape and is cooled. It should be appreciated that as a result of forming the glass on molten tin, measurable amounts of tin oxide may migrate into surface portions of the glass on the side that was in contact with the tin. Typically, a piece of float glass has an $SnO_2$ concentration of at least 0.05 wt. % in the first few microns below the surface of the glass that was in contact with the tin.

The total amount of iron present in the glass is expressed herein in terms of $Fe_2O_3$ in accordance with standard analytical practice, but that does not imply that all of the iron is actually in the form of $Fe_2O_3$. Likewise, the amount of iron in the ferrous state is reported as FeO, even though it may not actually be present in the glass as FeO. The proportion of the total iron in the ferrous state is used as a measure of the redox state of the glass and is expressed as the ratio $FeO/Fe_2O_3$, which is the weight percent of iron in the ferrous state (expressed as FeO) divided by the weight percent of total iron (expressed as $Fe_2O_3$). Unless stated otherwise, the term $Fe_2O_3$ in this specification shall mean total iron expressed in terms of $Fe_2O_3$ and the term FeO shall mean iron in the ferrous state expressed in terms of FeO.

The glass compositions disclosed in the present invention may be made using any of several types of melting arrangements, such as but not limited to, a conventional, overhead fired continuous melting operation as is well known in the art or a multi-stage melting operation, of the type that is discussed later in more detail. However, for glass compositions having a redox of less than 0.30, the former operation is preferred and for glass compositions having a redox of 0.30 or greater, the latter operation is preferred.

Conventional, overhead fired continuous melting operations are characterized by depositing batch material onto a pool of molten glass maintained within a tank type melting furnace and applying thermal energy until the materials are melted into the pool of molten glass. The melting tanks conventionally contain a large volume of molten glass so as to provide sufficient residence time for currents in the molten glass to affect some degree of homogenization and fining before the glass is discharged into a forming operation.

The multi-stage glass melting and refining operation disclosed in U.S. Patent Nos. 4,381,934 and 4,792,536 to Kunkle et al., 4,792,536 to Pecoraro et al. and 4,886,539 to Cerutti et al. is characterized by separate stages whereby more flexibility in controlling redox conditions is provided. The overall melting process disclosed in these patents consists of three stages: a liquefaction stage, a dissolving stage, and a vacuum refining stage. In the liquefaction stage, batch materials, preferably in a pulverulent state, are fed into a rotating, drum-shaped liquefying vessel. As batch material is exposed to the heat within the vessel, liquefied material flows down a sloped batch material lining to a central drain opening at the bottom of the vessel. A stream of liquefied material falls freely from the liquefaction vessel into a dissolving vessel for the dissolving stage. The dissolving vessel completes the dissolution of unmelted particles in the liquefied material coming from the liquefaction stage by providing residence time at a location isolated from the downstream refining stage. The dissolving vessel may be in the form of a horizontally elongated refractory basin with the inlet and outlet at opposite ends thereof so as to assure adequate residence time. The refining stage preferably consists of a vertically upright vessel that may be generally cylindrical in configuration having an interior ceramic refractory lining shrouded in a gas-tight, water-cooled casing. As the molten material enters the vessel from the dissolving vessel, it encounters a reduced pressure within the refining vessel. Gases included in the melt expand in volume, creating a foam. As foam collapses, it is incorporated into the liquid body held in the refining vessel. Refined molten material is drained from the bottom of the refining vessel into a receiving chamber and delivered to a float forming chamber.

A stirring arrangement may be employed in the multi-stage process to homogenize the glass after it has been refined in order to produce glass of the highest optical quality. If desired, a stirring arrangement may be integrated with a float forming chamber, whereby the glass in the stirring chamber rests on a layer of molten metal. The molten metal may be continuous with the molten metal constituting the support in the forming chamber, and is usually comprised essentially of tin.

The multi-stage operation discussed above generally operates at a redox level of 0.30 or higher; however redox levels below 0.30 may be achieved by increasing the amount of oxidizing constituents in the glass batch. For example, manganese oxide may be added to lower the redox level. Redox may also be controlled by adjusting the gas/$O_2$ ration of the burners.

The transmittance data provided throughout this disclosure is based on a glass thickness of 3.9 millimeters (0.154 inch). Luminous transmittance (LTA) is measured using C.I.E. 1931 standard illuminant "A" over the wavelength range 380 to 770 nanometers at 10 nanometer intervals. Total solar ultraviolet transmittance (TSUV ) is measured over the wavelength range 300 to 390 nanometers at 10 nanometer intervals. Total solar infrared transmittance (TSIR) is measured over the wavelength range 800 to 2100 nanometers at 50 nanometer intervals. Total solar energy transmittance (TSET) represents a computed value based on measured transmittances from 300 to 2100 nanometers at 50 nanometer intervals. All solar transmittance data is calculated using Parry Moon air mass 2.0 solar data. Glass color in terms of dominant wavelength and excitation purity are measured using C.I.E. 1931 standard illuminant "C" with a 2° observer.

To determine this transmittance data, the transmittance values are integrated over the wavelength range [a, b]. This rangeis divided into n equal subintervals of length h by points $\{X_0, X_1, ..., X_n\}$ where $X_1 = a + (i \times h)$. In the present disclosure, the Rectangular Rule is used to compute the transmittance data. An interpolating function is used to approximate the integrand $f$ in each subinterval. The sum of integrals of this function provides an approximation of the integral:

$$I = \int_b^a f(X)dX$$

In the case of the Rectangular Rule, a constant value $f(X_i)$ is used as an approximation of $f(X)$ on $[X_{i-1}, X_i]$. This yields a step-function approximation of $f(X)$ on [a,b], and the numerical integration formula:

$$I = \sum_{i=1}^{n} f(X_i) \times h$$

Tables 1, 2 and 3 illustrate reference examples of glass compositions at a 3.9 mm (0.154 in.) reference thickness which embody the principles of the present invention. Only the colorant portions of the examples are listed in the table below, with $Fe_2O_3$ being total iron, including that present as FeO.

The information provided in Tables 1 and 2 is based on a computer model that generates theoretical spectral properties based on the glass compositions. The compositions in Table 1 exclude nickel oxide as a colorant while the compositions in Table 2 include nickel oxide as a colorant. The information provided in Examples 31, 32, 33 and 34 in Table 3 is based on experimental laboratory melts. The remaining information in Table 3 is based on actual glass produced using the multi-stage melting process discussed earlier. However, under certain conditions, it may be preferred that the glasses disdosed in the present invention be made using a conventional, overhead fired continuous melting process as discussed earlier.

It should be noted that the modeled compositions in Table 1 included from 6 to 13 PPM of $Cr_2O_3$ and 1 PPM NiO, both of which are considered to be tramp and/or residual material levels, to better reflect the expected spectral properties of the glass. The compositions in Table 2 included similar $Cr_2O_3$ levels. In addition, the analysis of the experimental melts in Table 3 showed less than 3 PPM NiO and from 6 to 13 PPM $Cr_2O_3$. The analysis of the actual production glass disclosed in Table 3 showed less than 3 PPM NiO and between 5 to 8 PPM $Cr_2O_3$.

The representative base glass composition for the examples is as follows:

|  | Examples 1-34 | Examples 35-39 |
| --- | --- | --- |
| $SiO_2$ | 72.5% by weight | 72.0% by weight |
| $Na_2O$ | 13.6 | 13.5 |
| CaO | 8.8 | 8.8 |
| MgO | 3.8 | 3.8 |
| $Al_2O_3$ | 0.12 | 0.59 |

It should be appreciated that this composition may vary especially as a result of the actual amount of colorant present in the glass composition.

## TABLE 1

| | Ex. 1 | Ex. 2 | Ex. 3* | Ex. 4* | Ex. 5 | Ex. 6* | Ex. 7* | Ex. 8 | Ex. 9 | Ex. 10 | Ex. 11* | Ex. 12* | Ex. 13 | Ex. 14* |
|---|---|---|---|---|---|---|---|---|---|---|---|---|---|---|
| $Fe_2O_3$ wt. % | 0.935 | 0.820 | 1.100 | 0.820 | 0.820 | 0.820 | 0.710 | 1.000 | 0.710 | 0.600 | 0.710 | 0.710 | 0.450 | 0.600 |
| FeO wt. % | 0.261 | 0.209 | 0.281 | 0.209 | 0209 | 0.209 | 0.181 | 0.255 | 0.181 | 0.153 | 0.181 | 0.181 | 0.115 | 0.153 |
| Redox | 0.279 | 0.255 | 0.255 | 0.255 | 0.255 | 0.255 | 0.255 | 0.255 | 0.255 | 0.255 | 0.255 | 0.255 | 0.255 | 0.255 |
| CoO PPM | 148 | 150 | 124 | 124 | 124 | 100 | 125 | 98 | 98 | 103 | 98 | 75 | 98 | 65 |
| Se PPM | 23 | 20 | 20 | 24 | 16 | 20 | 14 | 14 | 17 | 15 | 11 | 14 | 14 | 9 |
| LTA | 27.95 | 34.35 | 34.43 | 35.58 | 39.28 | 40.42 | 41.48 | 41.6 | 43.63 | 45.45 | 47.01 | 48.81 | 48.88 | 52.43 |
| TSIR | 18.09 | 24.79 | 16.35 | 24.76 | 24.89 | 24.85 | 29.46 | 19.09 | 29.44 | 34.90 | 29.56 | 29.53 | 44.11 | 34.99 |
| TSUV | 13.21 | 17.06 | 12.17 | 15.98 | 18.30 | 17.14 | 21.74 | 15.22 | 20.72 | 24.69 | 22.93 | 21.85 | 30.74 | 26.05 |
| TSET | 23.58 | 30.30 | 24.95 | 30.32 | 32.38 | 32.32 | 36.16 | 29.62 | 36.51 | 40.63 | 38.41 | 38.60 | 47.34 | 43.48 |
| DW nm | 500.3 | 489.5 | 551 | 572.4 | 495. | 569.1 | 487.5 | 532.5 | 562.5 | 498.1 | 493.2 | 563 | 483.1 | 524.4 |
| Pe % | 0.97 | 2.66 | 3.67 | 4.84 | 2.39 | 5.41 | 4.17 | 2.51 | 2.7 | 0.90 | 3.02 | 3.88 | 1.27 | 1.13 |

\* not an example of the present invention

EP 0 653 388 B2

TABLE 2

| | Ex. 15 | Ex. 16 | Ex. 17 | Ex. 18* | Ex. 19* | Ex. 20* | Ex. 21 | Ex. 22* |
|---|---|---|---|---|---|---|---|---|
| $Fe_2O_3$ wt.% | 0.935 | 0.935 | 0.935 | 0.820 | 0.820 | 0.820 | 0.600 | 0.400 |
| FeO wt. % | 0.238 | 0.238 | 0.238 | 0.209 | 0.209 | 0.209 | 0.153 | 0.102 |
| Redox | 0.255 | 0.255 | 0.255 | 0.255 | 0.255 | 0.255 | 0.255 | 0.255 |
| CoO PPM | 170 | 160 | 150 | 124 | 124 | 124 | 110 | 102 |
| Se PPM | 19 | 19 | 19 | 18 | 20 | 20 | 10 | 6 |
| NiO PPM | 200 | 150 | 100 | 200 | 150 | 50 | 200 | 400 |
| $LT_A$ | 24.48 | 26.21 | 28.06 | 33.86 | 34.07 | 36.25 | 41.74 | 42.21 |
| TSIR | 20.36 | 20.25 | 20.55 | 24.44 | 24.51 | 24.72 | 34.40 | 46.29 |
| TSUV | 13.51 | 13.56 | 13.62 | 17.49 | 16.96 | 17.05 | 26.55 | 36.94 |
| TSET | 23.56 | 24.30 | 25.08 | 29.55 | 29.62 | 30.73 | 38.95 | 45.87 |
| DW nm | 502.6 | 505.4 | 509.2 | 566.3 | 568.7 | 562.6 | 515.8 | 558.8 |
| Pe % | 1.62 | 1.40 | 1.22 | 6.16 | 6.2 | 3.27 | 1.29 | 3.55 |
| | Ex. 23* | Ex. 24 | Ex. 25 | Ex. 26* | Ex. 27 | Ex. 28 | Ex. 29* | Ex. 30* |
| $Fe_2O_3$ wt.% | 0.710 | 0.710 | 0.600 | 0.500 | 0.200 | 0.500 | 0.500 | 0.500 |
| FeO wt. % | 0.181 | 0.181 | 0.153 | 0.128 | 0.051 | 0.128 | 0.128 | 0.128 |
| Redox | 0.255 | 0.255 | 0.255 | 0.255 | 0.255 | 0.255 | 0.255 | 0.255 |
| CoO PPM | 98 | 98 | 102 | 80 | 102 | 100 | 80 | 67 |
| Se PPM | 14 | 14 | 12 | 4 | 0 | 8 | 2 | 7 |
| NiO PPM | 100 | 50 | 100 | 400 | 500 | 200 | 400 | 100 |
| $LT_A$ | 42.58 | 43.92 | 44.50 | 45.10 | 45.34 | 45.52 | 46.23 | 51.89 |
| TSIR | 29.25 | 29.38 | 36.67 | 39.69 | 63.20 | 40.24 | 39.74 | 40.58 |
| TSUV | 21.68 | 21.74 | 25.84 | 33.32 | 55.13 | 31.41 | 34.46 | 30.90 |
| TSET | 36.03 | 36.72 | 40.17 | 43.21 | 56.99 | 43.91 | 43.86 | 46.55 |
| DW nm | 558.9 | 546.2 | 513.6 | 561.3 | 513.2 | 505.5 | 553.4 | 528.1 |
| Pe % | 3.37 | 1.91 | .97 | 6.00 | 1.24 | 1.34 | 4.54 | 1.21 |

* not an example of the present invention

TABLE 3

| | Ex. 31 | Ex. 32 | Ex. 33 | Ex. 34 | Ex. 35 | Ex. 36 | Ex. 37 | Ex. 38 | Ex. 39* |
|---|---|---|---|---|---|---|---|---|---|
| $Fe_2O_3$ wt. % | 0.935 | 0.930 | 0.818 | 0.820 | 0.822 | 0.811 | 0.772 | 0.720 | 0.657 |
| FeO wt. % | 0.261 | 0.257 | 0.245 | 0.257 | 0.216 | 0.212 | 0.198 | 0.185 | 0.160 |
| Redox | 0.279 | 0.276 | 0.300 | 0.313 | 0.263 | 0.261 | 0.257 | 0.257 | 0.244 |
| CoO PPM | 128 | 120 | 126 | 124 | 104 | 101 | 90 | 75 | 62 |
| Se PPM | 19 | 19 | 18 | 21 | 16 | 17 | 15 | 12 | 11 |
| $LT_A$ | 31.20 | 31.95 | 32.08 | 35.83 | 36.15 | 36.57 | 41.05 | 46.30 | 51.85 |
| TSIR | 18.07 | 18.40 | 19.25 | 18.34 | 25.12 | 26.01 | 28.34 | 29.32 | 32.62 |
| TSUV | 17.35 | 16.59 | 22.81 | 24.15 | 21.55 | 21.52 | 24.08 | 27.97 | 31.75 |
| TSET | 25.17 | 25.52 | 26.75 | 27.46 | 31.70 | 32.26 | 35.42 | 38.27 | 42.43 |
| DW nm | 496.3 | 515.6 | 488.8 | 497.6 | 486.4 | 489.5 | 500.8 | 496.9 | 510.8 |
| Pe | 1.72 | 1.05 | 2.79 | 1.59 | 2.62 | 1.41 | 0.62 | 1.05 | 0.65 |

* not an example of the present invention

Referring to Tables 1, 2 and 3, the present invention provides a neutral gray colored glass using a standard soda-lime-silica glass base composition and iron, cobalt, selenium and/or nickel as colorants. Not all of the examples are the same gray color as indicated by the dominant wavelengths (DW) and excitation purities (Pe). In the present invention, it is preferred that the glass be a neutral gray color characterized by dominant wavelengths in the range of 480 to 580 nanometers, preferably 485 to 540 nanometers, with an excitation purity of no higher than 3%.

In the present invention, the colorants used to produce a neutral gray colored glass with an LTA ranging from 20% to 50% at a thickness of 3.9 millimeters includes 0.15 to 1.2 wt. % $Fe_2O_3$ (total iron), up to 0.30 wt. % FeO, 60-180 PPM CoO, 0-30 PPM Se and 0-550 PPM NiO, and preferably 0.20 to 1.1 wt. % $Fe_2O_3$, 0.05 to 0.29 wt. % FeO, 62 to 170 PPM CoO, 0 to 24 PPM Se and 0 to 500 PPM NiO.

The redox ratio for the glass of the present invention is maintained between about 0.20 to 0.30, and preferably between 0.24 to 0.28 which is the typical operating range for a conventional overhead fired melting operation. Higher redox levels may be attained by processes disclosed herein, but the use of higher redox ratios is preferably avoided to prevent excessive volatilization of selenium during melting.

Glass made by the float process typically ranges from a sheet thickness of about 1 millimeters to 10 millimeters. For the vehicle glazing applications, it is preferred that the glass sheets have a thickness within the thickness range of 1.8 to 6 millimeters.

$TiO_2$ is added to the glass compositions of the present invention as ultraviolet absorbing material in an amount of from 0.1 to 1.0 weight percent of the glass composition. If desired, additional ultraviolet radiation absorbing materials may be added to the glass compositions of the present invention to improve its solar performance. Although not limiting in the present invention, a total of up to 2.0 wt. % of oxides of cerium, vanadium, titanium and molybdenum and combinations thereof may be used as UV absorbers to reduce the TSUV of the glass. In a preferred embodiment of the invention, $TiO_2$ is added in an amount ranging from 0.2 to 0.5 wt. %.

Other variations as are known to those of skill in the art may be resorted to without departing from the scope of the invention as defined by the claims that follow.

## Claims

1. A neutral gray colored glass composition having a base glass portion comprising:

| | |
|---|---|
| $SiO_2$ | 66 - 75 percent by weight |
| $Na_2O$ | 10 -20 |
| CaO | 5 - 15 |
| MgO | 0 - 5 |
| $Al_2O_3$ | 0 - 5 |
| $K_2O$ | 0 - 5 |

and a colorant portion consisting essentially of:

| | |
|---|---|
| $Fe_2O_3$ (total iron) | 0,15 to 1.2 percent by weight |
| FeO | up to 0,30 |
| CoO | 60 - 180 ppm |
| Se | 0 - 30 ppm |
| NiO | 0 - 550 ppm |

and $TiO_2$ as ultraviolet radiation absorbing material in an amount of from 0.1 to 1.0 weight percent of the glass composition, the glass having a luminous transmittance of 20 to 50 percent at a thickness of 3.9 millimeters, and an excitation purity of no higher than 3%.

2. The composition as in claim 1 wherein said $TiO_2$ is in an amount from 0.2 to 0.5 weight percent

3. The composition as in claim 1 wherein the $Fe_2O_3$ concentration is from 0.20 to 1.1 weight percent, the FeO concentration is from 0.05 to 0.29 weight percent, the CoO concentration is from 62 to 170 ppm, and the Se concentration is from 0 to 24 ppm.

4. The composition as in claim 1 wherein the $Fe_2O_3$ concentration is from 0.10 to 1.2 weight percent, the FeO concentration is from 0.10 to 0.29 weight percent, the CoO concentration is from 60 to 160 PPM, the Se concentration is from 5 to 30 PPM and further wherein said composition is essentially nickel-free.

5. The composition as in claim 4 wherein the $Fe_2O_3$ concentration is from 0.45 to 1.1 weight percent, the FeO concentration is from 0.11 to 0.285 weight percent, the CoO concentration is from 62 to 150 PPM and the Se concentration is from 9 to 24 PPM.

**6.** The composition as in claim 1 wherein the $Fe_2O_3$ concentration is from 0.15 to 1.0 weight percent, the FeO concentration is from 0.04 to 0.25 weight percent, the CoO concentration is from 60 to 180 PPM, the Se concentration is from 0 to 25 PPM and the NiO concentration is at least 25 PPM.

**7.** The composition as in claim 6 wherein the $Fe_2O_3$ concentration is from 0.20 to 0.94 weight percent, the FeO concentration is from 0.05 to 0.24 weight percent, the CoO concentration is from 67 to 170 PPM, the Se concentration is from 0 to 20 PPM and the NiO concentration is at least 50 PPM.

**8.** The composition of claim 1 wherein the color of the glass is **characterized by** dominant wavelengths in the range of 480 to 580 nanometers.

**9.** The composition of claim 8 wherein the color of the glass is **characterized by** dominant wavelengths in the range of 485 to 540 nanometers.

**10.** The composition as in claim 1 further including additional ultraviolet radiation absorbing material.

**11.** The composition as in claim 10 wherein said additional ultraviolet absorbing material is an oxide of a material selected from a group consisting essentially of cerium, vanadium and molybdenum and combination thereof in an amount resulting in a total amount of ultraviolet absorbing material of up to 2.0 weight percent of the glass composition.

**12.** A glass sheet made from the composition as recited in claim 1.

**13.** The glass sheet as in claim 12 wherein the sheet has a thickness between 3 to 6 mm.

**14.** The glass sheet as in claim 12 wherein the color of the glass is **characterized by** dominant wavelengths in the range of 480 to 580 nanometers.

**15.** The glass sheet as in claim 14 wherein the color of the glass is **characterized by** dominant wavelengths in the range of 485 to 540 nanometers.

**Patentansprüche**

**1.** Neutralgrau gefärbte Glaszusammensetzung mit einem Grundglasanteil enthaltend:

| | |
|---|---|
| $SiO_2$ | 66 bis 75 Gew.-% |
| $Na_2O$ | 10 bis 20 Gew.-% |
| CaO | 5 bis 15 Gew.-% |
| MgO | 0 bis 5 Gew.-% |
| $Al_2O_3$ | 0 bis 5 Gew.-% |
| $K_2O$ | 0 bis 5 Gew.-% |

und einen färbenden Anteil, der im Wesentlichen besteht aus:

| | |
|---|---|
| $Fe_2O_3$ (Gesamteisen) | 0,15 bis 1,2 Gew.-% |
| FeO | bis zu 0.30 Gew.-% |
| CoO | 60 bis 180 ppm |
| Se | 0 bis 30 ppm |
| NiO | 0 bis 550 ppm. |

und $TiO_2$ als UV-Strahlung absorbierenden Stoff in einer Menge von 0,1 bis 1,0 Gew.-% der Glaszusammensetzung, wobei das Glas eine Lichtdurchlässigkeit im sichtbaren Bereich von 20 bis 50% bei einer Dicke von 3,9 mm und eine Anregungsreinheit von nicht mehr als 3% aufweist.

**2.** Zusammensetzung nach Anspruch 1, wobei dieses $TiO_2$ in einer Menge von 0,2 bis 0,5 Gew.-% vorliegt.

3. Zusammensetzung nach Anspruch 1, wobei die Konzentration an $Fe_2O_3$ 0,20 bis 1,1 Gew.-% beträgt, die Konzentration an FeO 0,05 bis 0.05 to 0.29 weight percent, the CoO concentration is from 62 to 170 ppm, and the Se concentration is from 0 to 24 ppm.

4. The composition as in claim 1 wherein the $Fe_2O_3$ concentration is from 0.40 to 1.2 weight percent, the FeO concentration is from 0.10 to 0.29 weight percent, the CoO concentration is from 60 to 160 PPM, the Se concentration is from 5 to 30 PPM and further wherein said composition is essentially nickel-free.

5. The composition as in claim 4 wherein the $Fe_2O_3$ concentration is from 0.45 to 1.1 weight percent, the FeO concentration is from 0.11 to 0.285 weight percent, the CoO concentration is from 62 to 150 PPM and the Se concentration is from 9 to 24 PPM.

6. The composition as in claim 1 wherein the $Fe_2O_3$ concentration is from 0.15 to 1.0 weight percent, the FeO concentration is from 0.04 to 0.25 weight percent, the CoO concentration is from 60 to 180 PPM, the Se concentration is from 0 to 25 PPM and the NiO concentration is at least 25 PPM.

7. The composition as in claim 6 wherein the $Fe_2O_3$ concentration is from 0.20 to 0.94 weight percent, the FeO concentration is from 0.05 to 0.24 weight percent, the CoO concentration is from 67 to 170 PPM, the Se concentration is from 0 to 20 PPM and the NiO concentration is at least 50 PPM.

8. The composition of claim 1 wherein the color of the glass is **characterized by** dominant wavelengths in the range of 480 to 580 nanometers.

9. Zusammensetzung nach Anspruch 8, wobei die Farbe des Glases durch dominante Wellenlängen im Bereich von 485 bis 540 nm charakterisiert ist.

10. Zusammensetzung nach Anspruch 1, die weiterhin einen zusätzlichen UV-Strahlung absorbierenden Stoff enthält.

11. Zusammensetzung nach Anspruch 10, wobei dieser UV-Strahlung absorbierende Stoff ein Oxid eines Stoffes, ausgewählt aus einer Gruppe bestehend im Wesentlichen aus Cer, Vanadium, Molybdän und Kombinationen davon, in einer Menge, die in einer Gesamtmenge an UV-Strahlung absorbierenden Stoff von bis zu 2,0 Gew.-% der Glaszusammensetzung resultiert, ist.

12. Glasscheibe, die aus der Zusammensetzung wie in Anspruch 1 definiert hergestellt ist.

13. Glasscheibe nach Anspruch 12, wobei die Scheibe eine Dicke zwischen 3 und 6 mm aufweist.

14. Glasscheibe nach Anspruch 12, wobei die Farbe des Glases durch dominante Wellenlängen im Bereich von 480 bis 580 nm charakterisiert ist.

15. Glasscheibe nach Anspruch 14, wobei die Farbe des Glases durch dominante Wellenlängen im Bereich von 485 bis 540 nm charakterisiert ist.

**Revendications**

1. Composition de verre teinté en gris neutre possédant une partie en verre de base comprenant :

| | |
|---|---|
| $SiO_2$ | 66 - 75% en poids |
| $Na_2O$ | 10 - 20 |
| CaO | 5 - 15 |
| MgO | 0 - 5 |
| $Al_2O_3$ | 0 - 5 |
| $K_2O$ | 0 - 5 |

et une partie colorante essentiellement constituée de :

| Fe$_2$O$_3$ (fer total) | 0,15 à 1,2% en poids |
|---|---|
| FeO | jusqu'à 0,30 |
| CoO | 60 - 180 ppm |
| Se | 0 - 30 ppm |
| NiO | 0 - 550 ppm |

et du TiO$_2$ comme matière absorbant le rayonnement ultraviolet en une quantité de 0,1 à 1,0% en poids de la composition de verre, le verre ayant une transmission lumineuse de 20 à 50% à une épaisseur de 3,9 mm et une pureté d'excitation non supérieure à 3%.

2. Composition suivant la revendication 1, dans laquelle le TiO$_2$ précité est en une quantité de 0,2 à 0,5% en poids.

3. Composition suivant la revendication 1, dans laquelle la concentration en Fe$_2$O$_3$ est de 0,20 à 1,1 % en poids, la concentration en FeO est de 0,05 à 0,29% en poids, la concentration en CoO est de 62 à 170 ppm, et la concentration en Se est de 0 à 24 ppm.

4. Composition suivant la revendication 1, dans laquelle la concentration en Fe$_2$O$_3$ est de 0,40 à 1,2% en poids, la concentration en FeO est de 0,10 à 0,29% en poids, la concentration en CoO est de 60 à 160 ppm, la concentration en Se est de 5 à 30 ppm et de plus dans laquelle ladite composition est essentiellement exempte de nickel.

5. Composition suivant la revendication 4, dans laquelle la concentration en Fe$_2$O$_3$ est de 0,45 à 1,1 % en poids, la concentration en FeO est de 0,11 à 0,285% en poids, la concentration en CoO est de 62 à 150 ppm, et la concentration en Se est de 9 à 24 ppm.

6. Composition suivant la revendication 1, dans laquelle la concentration en Fe$_2$O$_3$ est de 0,15 à 1,0% en poids, la concentration en FeO est de 0,04 à 0,25% en poids, la concentration en CoO est de 60 à 180 ppm, la concentration en Se est de 0 à 25 ppm, et la concentration en NiO est d'au moins 25 ppm.

7. Composition suivant la revendication 6, dans laquelle la concentration en Fe$_2$O$_3$ est de 0,20 à 0,94% en poids, la concentration en FeO est de 0,05 à 0,24% en poids, la concentration en CoO est de 67 à 170 ppm, la concentration en Se est de 0 à 20 ppm, et la concentration en NiO est d'au moins 50 ppm.

8. Composition suivant la revendication 1, dans laquelle la couleur du verre est **caractérisée par** des longueurs d'onde dominantes dans la plage de 480 à 580 nanomètres.

9. Composition suivant la revendication 8, dans laquelle la couleur du verre est **caractérisée par** des longueurs d'onde dominantes dans la plage de 485 à 540 nanomètres.

10. Composition suivant la revendication 1, comprenant de plus une matière absorbant l'ultraviolet additionnelle.

11. Composition suivant la revendication 10, dans laquelle ladite matière absorbant l'ultraviolet additionnelle est un oxyde d'une matière choisie dans le groupe comprenant essentiellement le cérium, le vanadium et le molybdène et leurs combinaisons en une quantité conduisant à une quantité totale de matière absorbant l'ultraviolet pouvant atteindre 2,0% en poids de la composition de verre.

12. Feuille de verre fabriquée à partir de la composition telle que définie à la revendication 1.

13. Feuille de verre suivant la revendication 12, dans laquelle la feuille a une épaisseur entre 3 et 6 mm.

14. Feuille de verre suivant la revendication 12, dans laquelle la couleur du verre est **caractérisée par** des longueurs d'onde dominantes dans la plage de 480 à 580 nanomètres.

15. Feuille de verre suivant la revendication 14, dans laquelle la couleur du verre est **caractérisée par** des longueurs d'onde dominantes dans la plage de 485 à 540 nanomètres.